# EUROPÄISCHE PATENTSCHRIFT

(11) **EP 1 844 478 B1**
(45) Veröffentlichungstag und Bekanntmachung des Hinweises auf die Patenterteilung: **15.05.2013**
(21) Anmeldenummer: 06708011.9
(22) Anmeldetag: 03.02.2006
(51) Int. Cl.: H01B 7/08, H01B 9/00, H01B 7/40

(54) **MEHRSCHICHTIGER ELEKTRISCHER FLACHBANDLEITER**
MULTILAYERED ELECTRICAL FLAT CONDUCTOR
CONDUCTEUR ELECTRIQUE PLAT MULTICOUCHE

(30) Priorität: 03.02.2005 EP 05002211; 13.06.2005 EP 05012641; 08.09.2005 EP 05019546
(43) Veröffentlichungstag der Anmeldung: 17.10.2007
(73) Patentinhaber: Auto-Kabel Managementgesellschaft mbH, 79688 Hausen i.W. (DE)
(72) Erfinder: LIETZ, Franz-Josef, 46049 Oberhausen-lirich (DE)
(74) Vertreter: Cohausz & Florack
(86) Internationale Anmeldenummer: PCT/EP2006/050659
(87) Internationale Veröffentlichungsnummer: WO 2006/082238

(56) Entgegenhaltungen:
- EP-A- 0 007 478
- WO-A-01/50482
- US-A- 4 230 898
- US-A1- 2004 182 595

## Beschreibung

### TECHNISCHES GEBIET

Die Erfindung betrifft elektrische Kabel für Kraftfahrzeuge, insbesondere für Batterieleitungen in Kraftfahrzeugen, mit einem als Flachbandleiter gebildeten und von einer Isolationsschicht umgebenen Energieleiter.

### HINTERGRUND

Heutzutage werden im Fahrzeugbau Energiekabel für Batterieleitungen verwendet, die sich durch hohe Stromtragfähigkeit auszeichnen. Insbesondere bei Fahrzeugen, bei denen die Fahrzeugbatterie nicht im Motorraum angeordnet ist, werden die Batterieleitungen häufig durch die ganze Karosse hindurch geführt. Somit sind die Batterieleitungen häufig an verschiedenen Stellen innerhalb der Karosse abgreifbar.

Durch das fortschreitende Datenaufkommen in Kraftfahrzeugen werden neben den Energieleitern auch eine Vielzahl von Datenleitern in Kraftfahrzeugen verlegt. Beispielsweise werden heutzutage viele betriebsrelevante Elemente der Fahrzeuge über den so genannten CAN-Bus oder den LIN-Bus angesprochen. Die Verlegung von Kabeln für die Übertragung von Daten gestaltet sich beim Fahrzeugbau schwierig, da viele fein verästelte Kabelbäume in die Fahrzeuge eingebaut werden müssen. Durch die Vielzahl von Kabeln kann es problematisch sein, diese auseinander zu halten. Der Monteur muss bei der Montage genau darauf achten, dass die Kabelbäume richtig montiert werden.

Nachteilig ist, dass neben den Energieleitungen auch noch Datenleitungen in Kraftfahrzeugen verlegt werden, was einen erhöhten Montageaufwand und erhöhte Fehleranfälligkeit bedeutet. Auch bedeutet eine Vielzahl von Kabeln einen Platz- und Gewichtsnachteil gegenüber konzentrierten Komponenten.

Aus der WO 01/50482 A1 ist ein Flackleiter bekannt, Sei dem zwei Leitungen parallel zveinander in einer isolation geführt sind. Danesen ist ein Dutenlets in der isolation geführt.

Auch bei heutigen Fahrzeugen mit 12V und 48V Mehrspannungs-Bordnetzen, werden neben den üblichen Batteriekabeln weitere Kabel als Energieleiter benötigt. Die Bauraumreduktion und die automatisierte Montage erfordern Leiter, die Platz sparend und einfach zu montieren sind. Insbesondere bei Mehrspannungs-Bordnetzen ist dieses Erfordernis noch wichtiger, da für jede der Batteriespannungen eine eigene Energieleitung durch die Karosserie geführt werden muss. Abgriffe an verschiedenen Stellen im Bordnetz sind erforderlich. Mit den herkömmlichen Kabelsträngen aus Rundleitern ist dies kaum erreichbar.

Aus den zuvor hergeleiteten Nachteilen ergibt sich die Aufgabe, ein elektrisches Kabel für Kraftfahrzeuge zur Verfügung zu stellen, welches zugleich eine vereinfachte Montage von mehreren Leitungen ermöglicht.

### GEGENSTAND DER ERFINDUNG

Zur Lösung dieser Aufgabe schlägt die Erfindung ein elektrisches Kabel für Kraftfahrzeuge nach Anspruch 1 vos.

Aufgrund der guten Stromtragfähigkeit und der leichten Verlegbarkeit von Flachbandleitern ist der Energieleiter als Flachbandleiter ausgelegt. Zur Vereinfachung der Datenkommunikation in Kraftfahrzeugen oder auch zur Erleichterung der Montage von Mehrspannungs-Bordnetzen wird der Flachbandleiter als Träger für weitere Flachleiter verwendet. Hierzu its in der Isolationsschicht des Flachbandleiters zumindest ein weiterer Leiter gefürt. Bevorzugt sind aber auch zwei und mehr weitere Leiter. Die weiteren Leiter können einen erheblich niedrigeren Querschnitt als der Energieleiter haben. Beim Verlegen des Flachbandleiters kann unmittelbar auch eine Datenleitung oder eine Energieleitung mit einer anderen Bordnetzspannung durch die Karosserie verlegt werden. Hierdurch wird der Montageaufwand verringert und der Platzbedarf reduziert.

Es wird bevorzugt, dass die Leiter aus Vollmaterial gebildet sind. Diese sind leichter herzustellen als Leiter aus verdrillten Litzen. Insbesondere eigenen sich aus Blechen oder Bändern erzeugte Flachteile für die Herstellung der Leiter. Bevorzugt werden dabei aus weich geglühtem Aluminium stranggepresste Bleche oder Bänder verwendet.

Es ist auch möglich, dass geschnittene Leiter, aus Drähten gezogene Leiter oder auch gewalzte Leiter verwendet werden. Es ist auch möglich, Buntmetallleiter, bevorzugt Kupferleiter, zu verwenden.

Zur richtigen räumlichen Anordnung der Leiter innerhalb des Kabels wird bevorzugt, dass die Leiter in einem Trägerprofil aus Isolationsmaterial geführt sind. Das Trägerprofil kann zur Aufnahme der Leiter an geeigneten Stellen geformt sein. Hierdurch lassen sich eine Mehrzahl von Flachleitern zu einem erfindungsgemäßen Kabel zusammenfügen. Das Trägerprofil ist ein integraler Bestandteil des Kabels und nicht ein Kabelkanal zur Aufnahme mehrerer Kabel. Das Trägerprofil wird bei der Herstellung zusammen mit den Leitern isoliert. Dies kann mittels Extrudieren erfolgen. Eine Isolation der Leiter und/oder des Trägerprofils kann auch mittels Pulverbeschichtung oder Tauchlackieren erfolgen.

Die Aufnahmen des Trägerprofils für die Kabel können durch eine Isolationsschicht getrennt sein. Insbesondere können in einer Ebene zwei oder mehr durch Isolationsschichten getrennte Leiter nebeneinander angeordnet werden. Hierzu wird vorgeschlagen, dass an zumindest einer Seite des Trägerprofils zumindest zwei durch eine entlang der Leiter verlaufende Trennwand getrennte Aufnahmen vorgesehen sind.

Um mehrere erfindungsgemäße Kabel nebeneinander anzuordnen wird auch vorgeschlagen, dass das Trägerprofil an einem ersten äußeren Ende eine Aufnahme und an seinem anderen äußeren Ende ein Profil aufweist, derart, dass mehrere Trägerprofile mit Hilfe der Aufnahme und des Profils modular aufbaubar sind. Das Profil kann ein Schwalbenschwanz-Profil sein. Die entsprechende Aufnahme weist einen Querschnitt korrespondierend zu dem Profil auf, so dass das Profil in die Aufnahme vorzugsweise formschlüssig und kraftschlüssig passt. Auch können Aufnahme und Profil nach Art eines Schnappverschlusses geformt sein. Somit lassen sich zwei oder mehr Kabel nebeneinander anordnen.

Bevorzugt ist, dass der Flachbandleiter ein rechteckiges Profil hat. Jedes weitere Profil, beispielsweise U-förmig, C-förmig, quadratisch oder T-förmig ist ebenfalls möglich. Dadurch, dass der Energieleiter als Flachbandleiter gebildet ist, kann dieser als Träger für eine Vielzahl von Datenleitern verwendet werden. Gemäß eines vorteilhaften Beispiels wird vorgeschlagen, die Datenleiter zumindest entlang der breiten Seite des Profils des Flachbandleiters zu führen. Es ist ferner möglich, dass die Datenleiter zusätzlich oder alternativ entlang der kurzen Seite angeordnet werden.

Eine Vielzahl von Leitern lassen sich entweder parallel zu einer Ebene des Flachbandleiters oder übereinander verlegen. Bei einer parallelen Verlegung eignet sich das Trägerprofil besonders für die Isolation der Leiter untereinander.

Da das Gewicht der Kabelbäume in Kraftfahrzeugen zunehmend eine größere Rolle spielt, wird vorgeschlagen, die Leiter aus Aluminium zu bilden. Dies führt zu Kosten- und Gewichtsvorteilen gegenüber Kupferkabeln, obwohl der Alu-Cu-Leiter Energieleiter aufgrund seiner geringen Stromtragfähigkeit als ein einen erhöhten Querschnitt aufweisen muss. Es wird aber auch vorgeschlagen, die Leiter aus Kupfer zu bilden, dies ist insbesondere dann sinnvoll, wenn die Verlustleistung in den Leitern möglichst gering sein soll.

Es wird vorgeschlagen, dass bei übereinander angeordneten Leitern Abgriffe entlang einer Achse hintereinander angeordnet sind. Die Achse kann die Längsachse des Kabels sein, d.h. längs zur Stromflussrichtung. Die Abgriffe, insbesondere Übergabestützpunkte und Fremdstartstützpunkte, liegen dann auf der Achse des Kabels hintereinander. Es wird auch vorgeschlagen, dass die Abgriffe in einer Ebene parallel zum Kabel angeordnet sind. Diese Ebene kann die Ebene der breiten Seite des Profils sein. In diesem Fall kann der Abgriff des unteren Leiters hinter dem Abgriff des oberen Leiters nach oben gezogen sein, so dass beide Abgriffe im Wesentlichen in einer Ebene liegen.

Ein besonders hohes Datenaufkommen kann bewältigt werden, wenn der zumindest eine Leiter als Lichtwellenleiter gebildet ist. Lichtwellenleiter sind anfällig gegenüber kleinen Krümmungsradien und können leicht bei der Montage zerstört werden. Daher ist es besonders günstig, den Lichtwellenleiter in der Isolationsschicht zu führen, wo er gut vor Beschädigungen geschützt ist.

Ein weiterer Gegenstand der Erfindung ist ein Verfahren nach Anspruch 16

Besonders kostengünstig lassen sich die Flachbandleiter herstellen, wenn diese von einem von einem Coil abgewickelten Aluminiumband oder -blech geschnitten werden. Gepresste Aluminiumbänder oder gewalzte Bleche lassen sich aufgewickelt auf Coils leicht transportieren. Für die Herstellung müssen die Aluminiumbänder/-bleche lediglich abgecoilt werden und in Flachbandleiter zerschnitten werden. Auch können aus Drähten gezogene Flachleiter kostengünstig eingesetzt werden.

Die Isolationsschicht kann mittels Extrudieren, Pulverbeschichten oder Tauchlackieren auf das Bündel von Leitern aufgebracht werden.

Vor dem Extrudieren können die Leiter in Aufnahmen eines Trägerprofils geführt werden. Somit kann das Trägerprofil zusammen mit den Leitern isoliert werden. Dies ermöglich eine einfache Herstellung eines erfindungsgemäßen Kabels. Isolationsschichten zwischen den Leitern können durch das Trägerprofil bereitgestellt werden. Die Leiter können unmittelbar an den Wänden des Trägerprofils formschlüssig anliegen.

Bevorzugt ist auch, dass zumindest an einem Ende des Kabels Abgriffe angeordnet werden. Hierbei kann für jeden Leiter ein eigener Stützpunkt vorgesehen sein. Die Abgriffe von zwei übereinander angeordneten Leitern können in der Längsachse des Flachbandleiters unmittelbar hintereinander angeordnet sind.

Auch ist es bevorzugt, dass zumindest an einem Ende des Kabels Abgriffe angeordnet werden, derart, dass die Abgriffe von zwei in einer Ebene angeordneten Leitern parallel nebeneinander, quer zur Längsachse des Flachbandleiters angeordnet werden.

Um elektrische Anschlüsse an Abgriffe einfach auszuführen, oder aber Kabeldurchführungen durch Karosseriebleche besonders einfach zu gestalten, wird auch vorgeschlagen, dass zumindest an einem Ende des Kabels Abgriffe angeordnet werden, derart, dass die Abgriffe von zumindest zwei Leitern in einer Ebene parallel zur Ebene der breiten Seite des Kabels angeordnet sind. Dadurch, dass die Stützpunkte parallel zur Ebene des Kabels angeordnet sind, und bevorzugt in der gleichen Ebene wie diese liegen, kann eine Kabeldurchführung durch ein Karosserieblech für beide Leiter einfach gestaltet werden. Das Flachbandkabel kann sich bis hin zur Durchführung eng an das Karosserieblech anschmiegen, so dass nur wenig Bauraum verbraucht wird.

Die materialschlüssige Befestigung der Stützpunkte an die Leiter wird bevorzugt mittels Reibschweißen oder Multi-Orbital-Schweißen hergestellt.

Diese und andere Merkmale der Erfindung werden nachfolgend anhand einer Zeichnung näher erläutert.

### KURZE BESCHREIBUNG DER FIGUREN

In der Zeichnung zeigt:
- Fig. 1: einen ersten Querschnitt eines elektrischen Kabels gemäß eines nicht beanspruchten Ausführungsbeispiels;
- Fig. 2: einen zweiten Querschnitt eines elektrischen Kabels gemäß eines nicht beanspruchten Ausführungsbeispiels;
- Fig. 3: einen dritten Querschnitt eines elektrischen Kabels gemäß eines nicht beanspruchten Ausführungsbeispiels;
- Fig. 4: eine vierten Querschnitt eines elektrischen Kabels gemäß eines nicht beanspruchten Ausführungsbeispiels;
- Fig. 5: eine Draufsicht auf ein elektrisches Kabels eines Ausführungsbeispiels;
- Fig. 6: eine Seitenansicht eines Kabels mit zwei Stützpunkten hintereinander;
- Fig. 7: eine zweite Ansicht eines Kabels mit zwei Stützpunkten hintereinander
- Fig. 8: eine Schnittansicht eines Kabels mit drei Stützpunkten;
- Fig. 9: eine zweite Ansicht eines Kabels mit drei Stützpunkten;
- Fig. 10: eine Ansicht eines Trägerprofils;
- Fig. 11: eine schematische Ansicht eines Herstellungsverfahrens.

### AUSFÜHRLICHE BESCHREIBUNG DER FIGUREN

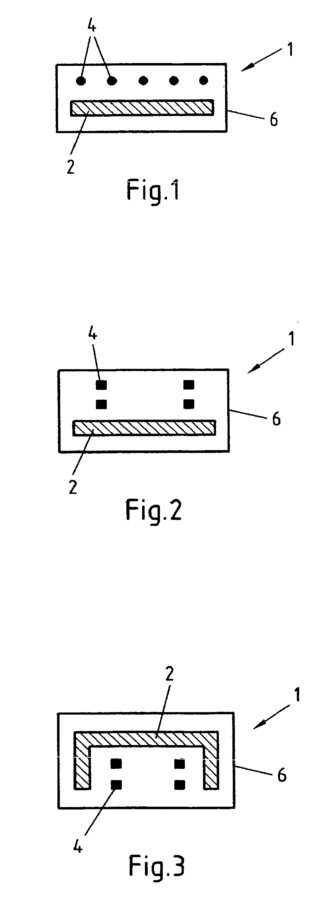

Fig. 1 zeigt ein elektrisches Kabel 1 mit einem Energieleiter 2 als Flachbandleiter und einer Vielzahl von Leitern 4.

Der Energieleiter 2 und die Leiter 4 sind zusammen in einer Isolationsschicht 6 verkapselt. Der Energieleiter 2 ist vorzugsweise Aluminiumblech oder gezogenem Alu-Draht hergestellt. Die Leiter 4 sind vorzugsweise aus Kupfer, können jedoch aus anderen Werkstoffen gebildet sein. Der Energieleiter 2 ist vorzugsweise aus Aluminium, E-Aluminium oder Legierungen davon gebildet. Die Isolationsschicht 6 ist vorzugsweise aus einem Polyvinylchlorid, Polyethylen, Harz oder sonstigem nicht leitfähigen Material gebildet.

Die Leiter 4 sind parallel zu der breiten Fläche des Energieleiters 2 angeordnet. Dies ermöglicht die Herstellung eines flach bauenden elektrischen Kabels.

Fig. 2 zeigt ein weiteres elektrisches Kabel 1 mit einem Energieleiter 2 und Leitern 4, die zusammen in einer Isolationsschicht 6 gekapselt sind. Die Leiter 4 sind sowohl nebeneinander als auch übereinander angeordnet. Hierdurch kann eine höhere Packungsdichte erreicht werden.

Fig. 3 zeigt ein elektrisches Kabel 1 bei dem der Energieleiter 2 ein U-förmiges Profil hat. Die Leiter 4 können in dem U-Profil angeordnet sein.

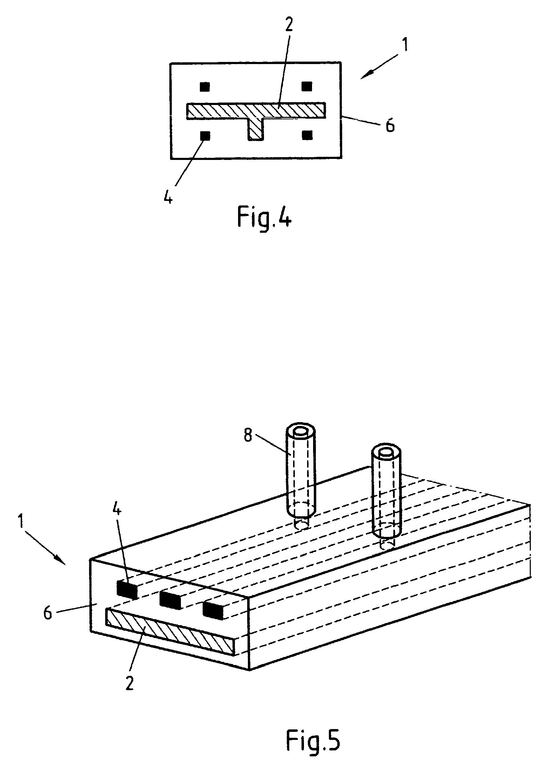

Fig. 4 zeigt einen Querschnitt eines elektrischen Kabels 1, bei dem der Energieleiter 2 ein T-förmiges Profil hat. Die Leiter 4 können sowohl rechteckig, quadratisch als auch rund sein. Die Leiter 4 können auch Lichtwellenleiter sein.

Fig. 5 zeigt einen Ansicht eines elektrischen Kabels 1 gemäß einem Ausführungsbeispiel. Gezeigt ist ein Schnitt durch ein elektrisches Kabel 1 bei dem der Energieleiter 2 und die Datenleitungen 4 gekapselt in der Isolationsschicht 6 sind. Die Datenleitungen 4 können an beliebigen Stellen des elektrischen Kabels 1 herausgeführt sein. Diese Abgriffe 8 können an beliebigen Stellen des elektrischen Kabels 1 angeordnet sein.

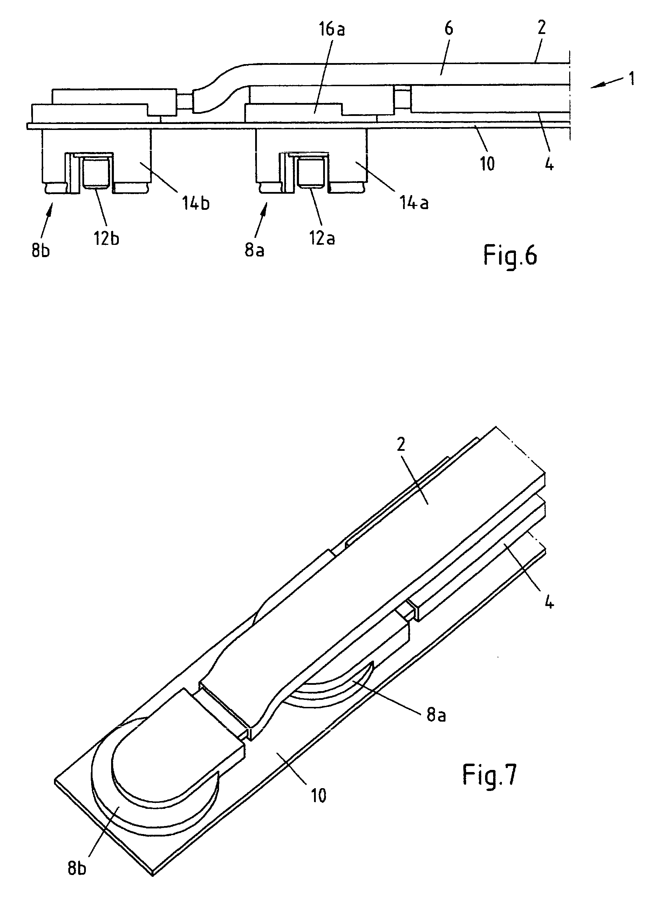

Fig. 6 zeigt eine Seitenansicht eines geschichteten Kabels 1 mit zwei Leitern. Die Leiter 2, 4 sind übereinander angeordnet. Der Leiter 2 kann einen Querschnitt von 150mm^2 und der Leiter 4 einen Querschnitt von 150mm^2 haben. Beide Leiter sind durch eine Isolationsschicht 6 nach außen isoliert. Zwischen den Leitern 2, 4 ist eine weitere nicht gezeigte Isolationsschicht angeordnet.

In der Darstellung ist das Kabel 1 eng an einem Blech 10, beispielsweise einem Karosserieblech, angeordnet. An einem Ende des Leiters 4, ist ein Stützpunkt 8a angeordnet. Der Stützpunkt 8b weist einen Bolzen 12a auf. Der Bolzen ist mittels Reibschweißen oder Multi-Orbital-Schweißen mit dem Leiter 4 materialschlüssig verbunden worden.

Aus dem Isolationsmaterial 6 kann eine Aussparung mittels Laser ausgeschnitten sein. Bevorzugt ist, wenn die Aussparung minimal kleiner, bevorzugt 0,01-10%, als der Durchmesser eines Vorsprungs des Bolzens 8 ist, so dass die Mantelfläche des Vorsprungs beim Einführen des Bolzens 8 in die Aussparung mit dem Isolationsmaterial 6 in Kontakt steht.

Zum Verschweißen wird der Bolzen 8 in die Aussparung eingeführt. Multi-Orbital-Schweißwerkzeuge (nicht dargestellt) beginnen mit einer Schwingung in einer parallel zum Leiter 2 liegenden Ebene und die Druckbeaufschlagung erfolgt in einer Richtung senkrecht dazu. Die Schwingungsbewegung der Werkstücke 8 und 1 zueinander kann ellipsen- oder kreisförmig und zwischen 90° und 180° phasenverschoben sein. Es ist auch möglich, dass nur der Bolzen 8 schwingt, und das Kabel 1 starr eingespannt ist. Durch die Multi-Orbital-Schweißung des Bolzens 8 mit dem Kabel 1 wird die Stirnfläche des Bolzens 8 stoffschlüssig mit dem Leiter 4 oder dem Leiter 2 verbunden. Außerdem kann eine stoffschlüssige oder formschlüssige Verbindung zwischen der Mantelfläche oder einer Ringschulter des Bolzens 8 und dem Isolationsmaterial 6 erzeugt werden.

Durch das Verschweißen wird zumindest entlang der Stirnfläche des Bolzens 8 eine stoffschlüssige Schweißverbindung zwischen dem Bolzen 8 und dem Leiter 4 oder dem Leiter 2 hergestellt. Während des Verschweißens wird das Isolationsmaterial 6 aufgeschmolzen und schmiegt sich dann fest an die Mantelfläche des Bolzens 8. Hierdurch wird eine Abdichtung der Schweißnaht gewährleistet.

Ist eine Ringschulter des Bolzens 8 aus Metall, so kann eine Schweißnaht an der dem Isolationsmaterial 6 zugewandten Seite der Ringschulter eine formschlüssige Verbindung sein. Während des Verschweißens wird durch das Aufliegen der Ringschulter auf dem Isolationsmaterial 6 dieses an der entsprechenden Fläche aufgeschmolzen und es entsteht eine formschlüssige Schweißnaht.

Für den Fall, dass die Ringschulter aus einem Isolationsmaterial gebildet ist, vorzugsweise aus demselben Material wie das Isolationsmaterial 6, wird während des Verschweißens des Bolzens 8 mit dem Leiter 4 oder 2 eine stoffschlüssige Schweißverbindung zwischen der Ringschulter und dem Isolationsmaterial 6 erzeugt. Diese stoffschlüssige Verbindung ist ebenfalls eine sichere Abdichtung für die Schweißnaht.

Durch das Multi-Orbital-Verschweißen der Kabel miteinander wird in einem Arbeitsschritt eine lagestabile, sichere und günstige Verbindung von Leitern gewährleistet.

Wie in Figur 6 gezeigt, ist der Stützpunkt 8a mit einem Verschluss 14a an dem Blech 10 befestigt. Der Verschluss 14a, beispielsweise ein Bajonettverschluss, greift an einer Umspritzung des Bolzens 12a an. Durch den Verschluss 14 kann der Stützpunkt 8a unmittelbar an dem Blech 10 angeordnet werden, und eine Kabeldurchführung ist realisiert. Um einen elektrischen Kontakt zwischen Leiter 4 und Blech 10 zu verhindern, ist eine Isolation 16a am Kabel 4 vorgesehen.

Unmittelbar hinter dem Stützpunkt 8a ist der Stützpunkt 8b des Leiters 2 angeordnet. Der Leiter 2 ist so geformt, dass der Stützpunkt 8b in einer Ebene mit dem Stützpunkt 8a liegt. Hierdurch kann ein kleiner Bauraum erreicht werden. Der Stützpunkt 8b ist identisch zum Stützpunkt 8a aufgebaut. Durch die gezeigt Anordnung können Kabeldurchführungen mit mehreren Leitern 2, 4 problemlos realisiert werden. Die Montage solcher Durchführungen ist einfach.

Fig. 7 zeigt eine Ansicht eines Kabels 1, wie es in Fig. 6 dargestellt ist. Zu erkennen ist, dass der Stützpunkt 8b unmittelbar hinter dem Stützpunkt 8a liegt. Auch zu erkennen ist, dass die Stützpunkte 8 auf der Längsachse der Leiter 2, 4 liegen.

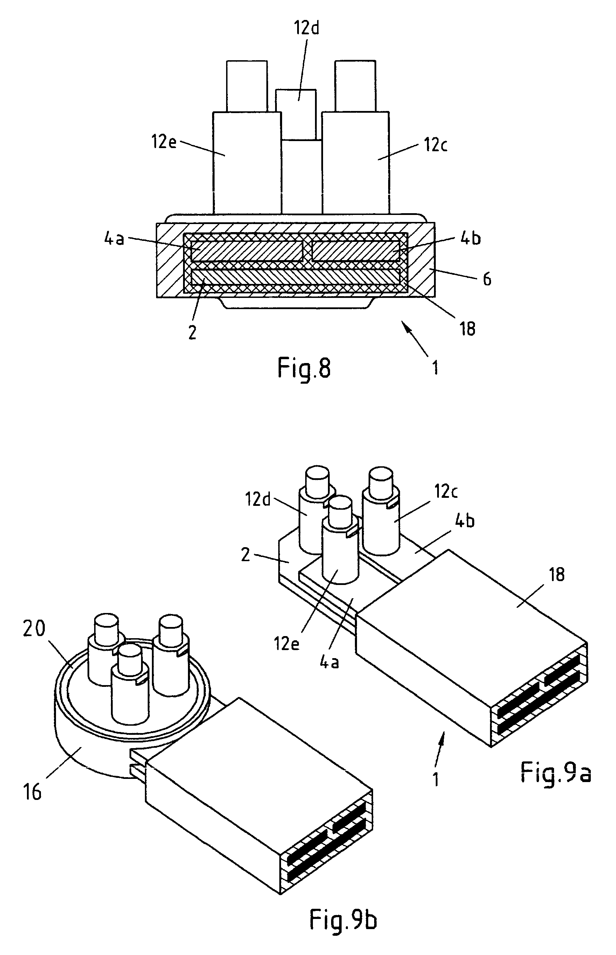

Fig. 8 zeigt eine Schnittansicht eines Kabels 1. Zu erkennen sind Leiter 2 und Leiter 4a, b, die auf einem Trägerprofil angeordnet sind. Das Trägerprofil 18 ist zusammen mit den Leitern 2, 4 von einer Isolationsschicht 6 umgeben. Jeder Leiter ist durch einen Bolzen 12c-e kontaktierbar. Die Bolzen 12 sind auf den Leitern 2, 4 materialschlüssig aufgebracht.

Fig. 9a zeigt eine Darstellung des Kabels 1 aus Fig. 8 ohne Isolationsschicht 6. Zu erkennen ist, dass die Bolzen 12 c, d parallel zu einander, quer zur Längsrichtung des Kabels 1 angeordnet sind. Unmittelbar dahinter ist der Bolzen 12 angeordnet. Durch diese enge Anordnung der Bolzen kann auf sehr kleiner Fläche eine Kabeldurchführung mehrerer Leitungen 2, 4 ermöglicht werden.

Fig. 9b zeigt die Anordnung von Fig. 9a, wobei zusätzlich eine Isolation 16 die drei Bolzen 12 umgibt. Die Bolzen 12 können zusammen umspritzt werden. Die Isolation 12 kann einen O-Ring 20 aufweisen. Hierdurch wird eine gute Abdichtung einer Kabeldurchführung zu einem Karosserieblech ermöglicht.

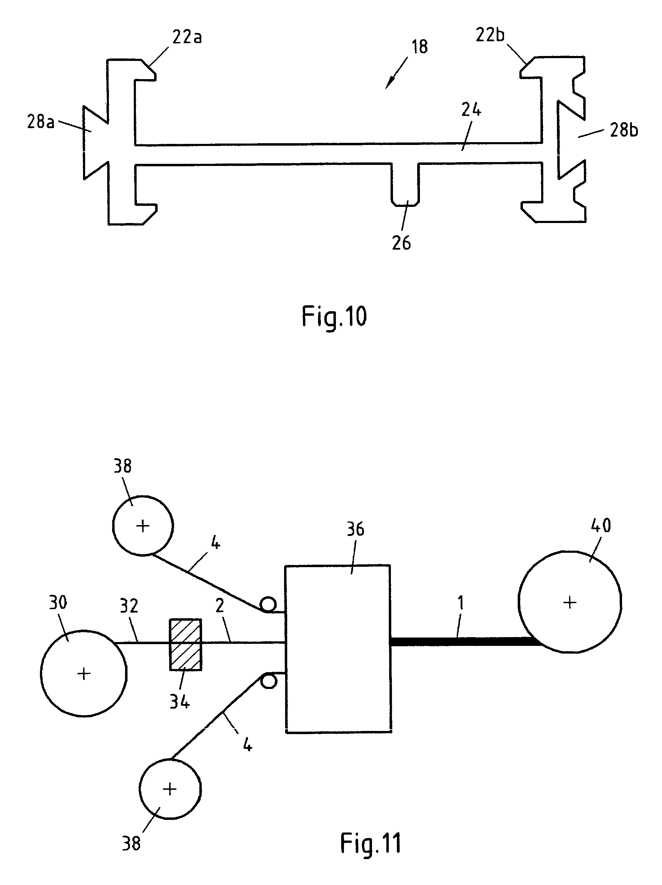

Fig. 10 zeigt ein Trägerprofil 18. Das Trägerprofil 18 weist auf seiner Oberseite eine Aufnahme für eine erste Leitung auf. Die Aufnahme ist durch hinterschnittene Vorsprünge 22 mit abgeschrägten Stirnflächen gebildet. Durch die abgeschrägten Stirnflächen kann ein Leiter mittels leichten Drucks in die Aufnahme eingesetzt werden. Der hinterschnittene Vorsprung verhindert, dass die einmal eingesetzte Leitung bei leichter Belastung aus der Aufnahme heraus fällt.

Zwischen der oberen Aufnahme und einer unteren Aufnahme ist eine Isolationsschicht 24 vorgesehen. Die untere Aufnahme ist zur Aufnahme von zwei Leitungen gebildet, wobei zwischen den Leitungen ein Isolationssteg 26 vorgesehen ist. Auch bei der unteren Aufnahme wird durch entsprechende Gestaltung der Stirnflächen eine Verrastung der Leiter in der Aufnahme gewährleistet.

Für einen modularen Aufbau mehrerer Trägerprofile 18 hintereinander weist das Trägerprofil 18 auf einer Seite eine Schwalbenschwanz-Profil 28a auf. Ein entsprechendes Gegenstück zu diesem Profil 28a ist auf der anderen Seite in Form einer Aufnahme 28b gebildet. Aufnahme 28b und Profil 28a ermöglichen das Zusammenstecken von mehreren Trägerprofilen 18 nebeneinander.

Das Trägerprofil 18 kann zusammen mit eingesetzten Leitern einem Extruder zugeführt werden, in dem eine Isolation des gesamten Aufbaus aufgebracht wird.

Fig. 11 zeigt ein Herstellungsverfahren zur Herstellung eines elektrischen Kabels 1. Ein von einem Coil 30 abgewickeltes Aluminiumblech 32 wird zunächst in einer Trennvorrichtung 34 in Flachbandleiter zertrennt. Die Flachbandleiter werden als Energieleiter 2 einem Extruder 36 zugeführt. Zusätzlich zu einem Energieleiter 2 werden Leiter 4 von Haspeln 38 dem Extruder 36 zugeführt. Die Leiter 4 können elektrische Kabel als auch Lichtwellenleiter sein. In dem Extruder 36 wird der Energieleiter 2 mit den Leitern 4 in einer Isolierung verkapselt. Danach kann das Kabel 1 erneut auf eine Haspel 40 aufgecoilt werden.

## Patentansprüche

1. Elektrisches Kabel (1) für Kraftfahrzeuge, insbesondere für Batterieleitungen in Kraftfahrzeugen,
- mit einem als Flachbandleiter gebildeten und von einer Isolationsschicht (6) umgebenen Energieleiter (2), und
- mit einem weiteren in der Isolationsschicht (6) geführten Leiter (4),
**dadurch gekennzeichnet, dass**
- ein Abgriff (8) zumindest eines Leiters (4) aus der Isolationsschicht (6) heraus geführt ist,
- wobei der Abgriff durch einen stoffschlüssig mit zumindest dem Energieleiter (2) verbundenen Bolzen gebildet ist.

2. Elektrisches Kabel (1) nach Anspruch 1, **dadurch gekennzeichnet, dass** die Leiter (2, 4) aus Vollmaterial gebildet sind.

3. Elektrisches Kabel (1) nach Anspruch 1 oder 2, **dadurch gekennzeichnet, dass** ein weiterer Leiter (4) ein Datenleiter ist.

4. Elektrisches Kabel (1) nach einem der Ansprüche 1 bis 3, **dadurch gekennzeichnet, dass** die Leiter (2, 4) in einem Trägerprofil aus Isolationsmaterial geführt sind.

5. Elektrisches Kabel (1) nach Anspruch 4, **dadurch gekennzeichnet, dass** das Trägerprofil zumindest zwei durch eine Isolationsschicht getrennte Aufnahmen aufweist.

6. Elektrisches Kabel (1) nach einem der Ansprüche 4 oder 5, **dadurch gekennzeichnet, dass** zumindest eine Seite des Trägerprofils zumindest zwei durch eine entlang der Leiter (2, 4) verlaufende Trennwand getrennte Aufnahmen aufweist.

7. Elektrisches Kabel (1) nach einem der Ansprüche 4 bis 6, **dadurch gekennzeichnet, dass** das Trägerprofil an einem äußeren Ende eine Aufnahme und an seinem anderen äußeren Ende ein Profil aufweist, derart, dass mehrere Trägerprofile mit Hilfe der Aufnahme und des Profils modular aufbaubar sind.

8. Elektrisches Kabel (1) nach einem der Ansprüche 1 bis 7, **dadurch gekennzeichnet, dass** zumindest ein Leiter (2, 4) ein rechteckiges Profil hat.

9. Elektrisches Kabel (1) nach einem der Ansprüche 1 bis 8, **dadurch gekennzeichnet, dass** die weiteren Leiter (4) zumindest entlang der breiten Seite des Profils des Flachbandleiters geführt sind.

10. Elektrisches Kabel (1) nach einem der Ansprüche 1 bis 9, **dadurch gekennzeichnet, dass** die weiteren Leiter (4) in einer Ebene parallel zum Energieleiter nebeneinander geführt sind.

11. Elektrisches Kabel (1) nach einem der Ansprüche 1 bis 10, **dadurch gekennzeichnet, dass** die weitern Leiter (4) übereinander geführt sind.

12. Elektrisches Kabel (1) nach einem der Ansprüche 1 bis 11, **dadurch gekennzeichnet, dass** die Leiter (2, 4) aus Aluminium oder Kupfer gebildet sind.

13. Elektrisches Kabel (1) nach einem der Ansprüche 1 bis 12, **dadurch gekennzeichnet, dass** bei übereinander angeordneten Leitern (2, 4) Abgriffe (8) entlang einer Achse hintereinander angeordnet sind.

14. Elektrisches Kabel (1) nach Anspruch 13, **dadurch gekennzeichnet, dass** die Abgriffe (8) in einer Ebene parallel zum Flachbandleiter angeordnet sind.

15. Elektrische Kabel (1) nach einem der Ansprüche 1 bis 14, **dadurch gekennzeichnet, dass** zumindest ein Leiter (4) als Lichtwellenleiter gebildet ist.

16. Verfahren zur Herstellung eines elektrischen Kabels (1) für Kraftfahrzeuge durch
- Formen eines Flachbandleiters als Energieleiter (2),
- Isolieren des Energieleiters (2) mittels einer Isolationsschicht (6),
- Einbringen von zumindest eines weitern Leitern (4) in die Isolationsschicht (6),
- stoffschlüssiges Verbinden eines Bolzens mit zumindest einem Leiter (4) durch die Isolationsschicht (6) hindurch.

17. Verfahren nach Anspruch 16, **dadurch gekennzeichnet, dass** die Leiter (2, 4) aus einem gecoilten Aluminiumband/-blech (12) hergestellt werden.

18. Verfahren nach Anspruch 16 oder 17, **dadurch gekennzeichnet, dass** die Isolationsschicht (6) mittels Extrudieren auf die Leiter (2, 4) aufgebracht wird.

19. Verfahren nach einem der Ansprüche 16 bis 18, **dadurch gekennzeichnet, dass** die Leiter (2, 4) in Aufnahmen eines Trägerprofils geführt werden und dass das Trägerprofil zusammen mit den Leitern (2, 4) isoliert wird.

20. Verfahren nach einem der Ansprüche 16 bis 19, **dadurch gekennzeichnet, dass** zumindest an einem Ende des Kabels (1) Abgriffe angeordnet werden, derart, dass die Abgriffe von zwei übereinander angeordneten Leitern (2, 4) in der Längsachse des Kabels (1) hintereinander angeordnet sind.

21. Verfahren nach einem der Ansprüche 16 bis 20, **dadurch gekennzeichnet, dass** zumindest an einem Ende des Kabels (1) Abgriffe angeordnet werden, derart, dass die Abgriffe von zwei in einer Ebene angeordneten Leitern (4) parallel, quer zur Längsachse des Kabels (1) angeordnet werden.

22. Verfahren nach einem der Ansprüche 16 bis 21, **dadurch gekennzeichnet, dass** zumindest an einem Ende des Kabels (1) Abgriffe angeordnet werden, derart, dass die Abgriffe von zumindest zwei Leitern (2, 4) in einer Ebene parallel zur Ebene der breiten Seite des Kabels (1) angeordnet sind.

23. Verfahren nach einem der Ansprüche 16 bis 22, **dadurch gekennzeichnet, dass** zumindest die Abgriffe mittels Reibschweißen oder Multi-Orbitalschweißen an den Leitern (2, 4) materialschlüssig angeordnet werden.

## Claims

1. Electrical cable (1) for motor vehicles, in particular for battery cables in motor vehicles,
- having a power conductor (2) which is in the form of a flat strip conductor and is surrounded by an insulating layer (6), and with
- a further conductor (4) run in the insulating layer (6) **characterized in that**
- a tapping (8) from at least one conductor (4) is run out from the insulating layer (6), wherein the tapping is a bolt being in material connection at least with the power conductor (2).

2. Electrical cable (1) according to Claim 1, **characterised in that** the conductors (2, 4) are formed from solid material.

3. Electrical cable (1) according to Claim 1 or 2, **characterised in that** a further conductor (4) is a data conductor.

4. Electrical cable (1) according to any one of Claims 1 to 3, **characterised in that** the conductors (2, 4) are run in a carrier profile of insulating material.

5. Electrical cable (1) according to Claim 4, **characterised in that** the carrier profile comprises at least two receptacles separated by an insulating layer.

6. Electrical cable (1) according to either of Claims 4 and 5, **characterised in that** at least one side of the carrier profile comprises at least two receptacles separated by a partition extending along the conductors (2, 4).

7. Electrical cable (1) according to any one of Claims 4 to 6, **characterised in that** the carrier profile comprises a receptacle at one outer side and a profiling at its other outer side, in such a way that a plurality of carrier profiles can be combined in modular fashion with the help of the receptacle and profiling.

8. Electrical cable (1) according to any one of claims 1 to 7, **characterised in that** the profile of at least one conductor (2, 4) is rectangular.

9. Electrical cable (1) according to any one of Claims 1 to 8, **characterised in that** the further conductors (4) are run at least along the wide side of the profile of the flat strip conductor.

10. Electrical cable (1) according to any one of Claims 1 to 9, **characterised in that** the further conductors (4) are run next to one another in a plane parallel to the power conductor.

11. Electrical cable (1) according to any one of Claims 1 to 10, **characterised in that** the further conductors (4) are run one above the other.

12. Electrical cable (1) according to any one of Claims 1 to 11, **characterised in that** the conductors (2, 4) are formed from aluminium or copper.

13. Electrical cable (1) according to any one of Claims 1 to 12, **characterised in that**, where conductors (2, 4) are arranged one above the other, tappings (8) are arranged one downstream of the other along an axis.

14. Electrical cable (1) according to Claim 13, **characterised in that** the tappings (8) are arranged parallel to the flat strip conductor in a plane.

15. Electrical cable (1) according to any one of Claims 1 to 14, **characterised in that** at least one conductor (4) is in the form of an optical wageguide.

16. Method of producing an electrical cable (1) for motor vehicles by
- forming a flat strip conductor as a power conductor (2),
- insulating the power conductor (2) by means of a insulating layer (6)
- introducing at least one further conductor (4) into the insulating layer (6), and
- materially connecting a bolt with at least one conductor (4) through the insulation layer (6).

17. Method according to Claim 16, **characterised in that** the conductors (2, 4) are produced from coiled aluminium strip/sheet (12).

18. Method according to Claim 16 or 17, **characterised in that** the insulating layer (6) is applied to the conductors (2, 4) by means of extrusion.

19. Method according to any one of Claims 16 to 18, **characterised in that** the conductors (2, 4) are run in receptacles in a carrier profile and **in that** the carrier profile is insulated together with the conductors (2, 4).

20. Method according to any one of Claims 16 to 19, **characterised in that** tappings are arranged at at least one end of the cable (1) in such way that the tappings from two conductors (2, 4) arranged one above the other are arranged one downstream of the other on the longitudinal axis of the cable (1).

21. Method according to any one of Claims 16 to 20, **characterised in that** tappings are arranged at at least one end of the cable (1) in such a way that that the tappings from two conductors (4) arranged in a plane are arranged in parallel transversely to the longitudinal axis of the cable (1).

22. Method according to one any of Claims 16 to 21, **characterised in that** tappings are arranged at at least one end of the cable (1) in such a way that the tappings from at least two conductors (2, 4) are arranged in a plane parallel to the plane of the wide side of the cable (1) .

23. Method according to one any of Claims 16 to 22, **characterised in that** at least the tappings are arranged on the conductors (2, 4) by material connection by means of friction welding or multi-orbital welding.

## Revendications

1. Câble électrique (1) pour véhicules automobiles, en particulier pour des câblages de batteries dans des véhicules automobiles,
- comprenant un conducteur d'énergie (2) formé comme un conducteur plat et entouré par une couche isolante (6), et
- comprenant un autre conducteur (4) guidé dans la couche isolante (6),
**caractérisé,**
- **en ce qu'**une prise (8) d'au moins un conducteur (4) est réalisée en étant guidée en sortie de la couche isolante (6),
- où la prise est formée par un ergot relié au moins au conducteur d'énergie (2), par continuité de matière.

2. Câble électrique (1) selon la revendication 1, **caractérisé en ce que** les conducteurs (2, 4) sont formés par un matériau plein.

3. Câble électrique (1) selon la revendication 1 ou 2, **caractérisé en ce qu'**un autre conducteur (4) est un conducteur de données.

4. Câble électrique (1) selon l'une quelconque des revendications 1 à 3, **caractérisé en ce que** les conducteurs (2, 4) sont guidés dans un profilé de support réalisé dans un matériau isolant.

5. Câble électrique (1) selon la revendication 4, **caractérisé en ce que** le profilé de support présente au moins deux logements séparés par une couche isolante.

6. Câble électrique (1) selon l'une des revendications 4 ou 5, **caractérisé en ce qu'**au moins un côté du profilé du support présente au moins deux logements séparés par une paroi de séparation s'étendant le long des conducteurs (2, 4).

7. Câble électrique (1) selon l'une quelconque des revendications 4 à 6, **caractérisé en ce que** le profilé de support présente, au niveau d'une extrémité extérieure, un logement, et, au niveau de son autre extrémité extérieure, un profilé, de manière telle que plusieurs profilés de support puissent être constitués de façon modulaire, à l'aide du logement et du profilé.

8. Câble électrique (1) selon l'une quelconque des revendications 1 à 7, **caractérisé en ce qu'**au moins un conducteur (2, 4) a un profilé rectangulaire.

9. Câble électrique (1) selon l'une quelconque des revendications 1 à 8, **caractérisé en ce que** les autres conducteurs (4) sont guidés au moins le long du côté large du profilé du conducteur plat.

10. Câble électrique (1) selon l'une quelconque des revendications 1 à 9, **caractérisé en ce que** les autres conducteurs (4) sont guidés les uns à côté des autres, dans un plan parallèle au conducteur d'énergie.

11. Câble électrique (1) selon l'une quelconque des revendications 1 à 10, **caractérisé en ce que** les autres conducteurs (4) sont guidés les uns au-dessus des autres.

12. Câble électrique (1) selon l'une quelconque des revendications 1 à 11, **caractérisé en ce que** les conducteurs (2, 4) sont formés en aluminium ou en cuivre.

13. Câble électrique (1) selon l'une quelconque des revendications 1 à 12, **caractérisé en ce que**, dans le cas de conducteurs (2, 4) disposés les uns au-dessus des autres, des prises (8) sont disposées les unes derrière les autres, le long d'un axe.

14. Câble électrique (1) selon la revendication 13, **caractérisé en ce que** les prises (8) sont disposées dans un plan parallèle au conducteur plat.

15. Câble électrique (1) selon l'une quelconque des revendications 1 à 14, **caractérisé en ce qu'**au moins un conducteur (4) est formé comme un guide d'ondes optiques.

16. Procédé de fabrication d'un câble électrique (1) pour véhicules automobiles, consistant :
- à former un conducteur plat comme un conducteur d'énergie (2),
- à isoler le conducteur d'énergie (2) au moyen d'une couche isolante (6),
- à introduire au moins un autre conducteur (4) dans la couche isolante (6),
- à relier un ergot à au moins un conducteur (4), par continuité de matière à travers la couche isolante (6).

17. Procédé selon la revendication 16, **caractérisé en ce que** les conducteurs (2, 4) sont fabriqués à partir d'une tôle / d'une bande d'aluminium bobinée (12).

18. Procédé selon la revendication 16 ou 17, **caractérisé en ce que** la couche isolante (6) est appliquée sur les conducteurs (2, 4), par extrusion.

19. Procédé selon l'une quelconque des revendications 16 à 18, **caractérisé en ce que** les conducteurs (2, 4) sont guidés dans des logements d'un profilé de support, et **en ce que** le profilé de support et les conducteurs (2, 4) sont isolés ensemble.

20. Procédé selon l'une quelconque des revendications 16 à 19, **caractérisé en ce que** des prises sont disposées au moins au niveau d'une extrémité du câble (1), de manière telle que les prises de deux conducteurs (2, 4) disposés l'un au-dessus de l'autre soient disposées l'une derrière l'autre suivant l'axe longitudinal du câble (1).

21. Procédé selon l'une quelconque des revendications 16 à 20, **caractérisé en ce que** des prises sont disposées au moins au niveau d'une extrémité du câble (1), de manière telle que les prises de deux conducteurs (4) disposés dans un plan soient disposées parallèlement, de façon transversale par rapport à l'axe longitudinal du câble (1).

22. Procédé selon l'une quelconque des revendications 16 à 21, **caractérisé en ce que** des prises sont disposées au moins au niveau d'une extrémité du câble (1), de manière telle que les prises d'au moins deux conducteurs (2, 4) soient disposées parallèlement au plan du côté large du câble (1).

23. Procédé selon l'une quelconque des revendications 16 à 22, **caractérisé en ce qu'**au moins les prises sont disposées en s'assemblant sur les conducteurs (2, 4), par continuité de matière, en procédant par soudage par friction ou par soudage multi-orbital.
